# DEMANDE DE BREVET EUROPEEN

(11) **EP 1 300 704 A1**
(43) Date de publication de la demande: **09.04.2003**
(21) Numéro de dépôt: 02292440.1
(22) Date de dépôt: 03.10.2002
(51) Int. Cl.: G02B 6/12

(54) **Procédé de fabrication de composants optiques intégrés utilisant des réseaux de Bragg et composants optiques ainsi obtenus**

(30) Priorité: 04.10.2001 FR 0112765
(71) Demandeur: Kloe S.A., 34830 Clapiers (FR)
(72) Inventeur: Coudray, Paul Marcel, 34270 Saint Jean de Cuculles (FR)
(74) Mandataire: Berger, Helmut

(57) **Abrégé**

L'invention concerne un procédé de fabrication de composants optiques intégrés utilisant des réseaux de Bragg.

Selon le procédé, on réalise dans une couche photosensible un guide d'onde par écriture directe avec le faisceau d'un laser et, dans ce guide d'onde, un réseau de Bragg, et il est caractérisé en ce que le guide d'onde (10) et le réseau de Bragg (13) sont réalisés par photoinscription dans la couche photosensible (1) en une seule étape.

L'invention est utilisable pour la réalisation de composants optiques.

## Description

L'invention concerne un procédé de fabrication de composants optiques intégrés utilisant des réseaux de Bragg, selon lequel on réalise dans une couche photosensible déposée sur un substrat un guide d'onde par écriture directe avec le faisceau d'un laser et, dans ce guide d'onde, un réseau de Bragg.

L'invention concerne également un composant optique obtenu selon ce procédé.

Selon un procédé de ce type, qui est connu, on réalise en une première étape le guide d'onde dans la couche photosensible, par photoinscription, puis grave un réseau de Bragg dans la couche photosensible, donc en relief, en plaçant un masque de phase sur la couche photosensible à l'endroit où le guide onde a été inscrit. Puis on utilise un faisceau d'un laser Excimer très intense et donc très énergétique, pour inscrire le réseau de Bragg dans le guide onde déjà photoinscrit.

Ce procédé présente l'inconvénient majeur qu'il nécessite plusieurs étapes, d'une part, et d'autre part, exige l'utilisation d'un laser qui est très puissant, c'est-à-dire très coûteux et qui risque de détériorer le matériau.

La présente invention a pour but de proposer un procédé de fabrication du type défini plus haut, qui pallie ces inconvénients.

Pour atteindre ce but, le procédé selon l'invention est caractérisé en ce que le guide d'onde et le réseau de Bragg sont réalisés par photoinscription dans la couche photosensible en une seule même étape.

Selon une caractéristique de l'invention on inscrit le guide d'onde dans la couche photosensible à travers une plaque en un matériau transparent à la lumière du laser et dans laquelle est gravé un masque de phase dans la zone se trouvant au-dessus de la partie devant comprendre le réseau de Bragg.

Selon une autre caractéristique de l'invention, la plaque est une plaque de silice.

Selon une autre caractéristique de l'invention, la plaque comporte dans le sens du déplacement du faisceau de lumière de photoinscription au moins une zone sans réseau gravée, à l'avant ou à l'arrière de la zone de masque de phase.

Un composant optique intégré obtenu selon le procédé proposé par l'invention est caractérisé en ce que le réseau de Bragg photoinscrit couvre toute la largeur du guide d'onde.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- Les figures 1 et 2 sont des vues schématiques de dessus et en élévation d'un composant optique, pour illustrer le procédé selon l'invention, et
- La figure 3 est une vue de dessus schématique du produit final.

Comme l'illustre les figures, le procédé selon l'invention a pour but de réaliser un guide d'onde comportant un réseau de Bragg, dans une couche photosensible 1 déposée sur un substrat 2 pour obtenir un composant optique intégré.

Le procédé selon l'invention est caractérisé en ce qu'il permet d'inscrire dans une couche photosensible un guide d'onde et un réseau de Bragg à modulation d'indice de réflexion dans ce guide d'onde en une seule étape avec un simple laser UV tel qu'un laser HeCd par exemple. Le procédé permet d'obtenir un réseau de Bragg qui est parfaitement aligné et donc couplé avec des guides d'entrée et de sortie.

A cette fin, le procédé selon l'invention consiste à inscrire le guide d'onde dans la couche photosensible 1 à travers une plaque 4 en un matériau transparent à la lumière UV telle qu'une plaque de silice, dans laquelle un masque de phase de pas Λ a été gravé. La zone du réseau gravée est désignée par la référence 5 et se trouve entre deux zones 6 et 7 complètement transparentes, c'est-à-dire dans lesquelles aucun réseau n'est gravé.

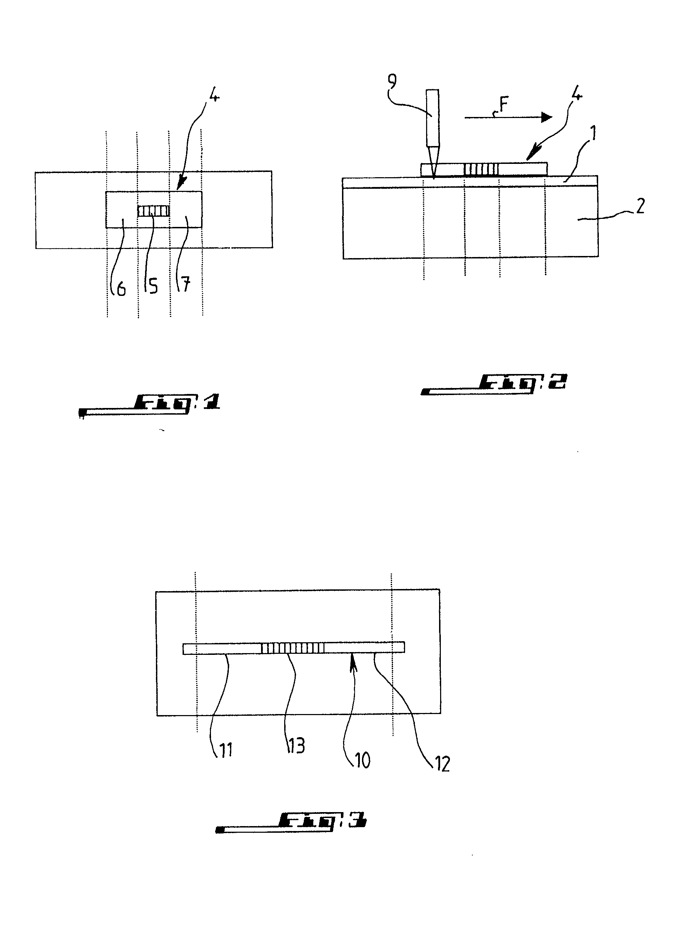

Comme le montre les figures, cette plaque de silice 4 est posée sur la couche photosensible 1 et ensuite le faisceau laser indiqué en 9 sur la figure 2 est focalisé sur la couche photosensible à travers cette plaque 4 et déplacé en direction de la flèche F d'une extrémité longitudinale de la plaque à l'autre. Le faisceau laser passe alors tout d'abord par la zone transparente 6, puis par la zone 5 du réseau de pas Λ et ensuite par l'autre zone transparente 7.

Le déplacement du faisceau focalisé sur la couche photosensible 1 à travers cette plaque permet d'inscrire le guide d'onde avec la largeur désirée, de la même manière qu'en l'absence de cette plaque. Lorsque le faisceau insole la partie de la plaque de silice où le réseau de pas Λ a été gravé, à savoir la zone 5, il photoinscrit simultanément dans la couche photosensible le guide d'onde et un réseau de Bragg de pas λ = Λ/2.

Etant donné que le principe de la photoinscription d'un guide onde dans une couche photosensible à l'aide d'un faisceau d'un laser est connu en soi, il n'est pas nécessaire d'en faire ici une description détaillée. On sait également qu'une couche photosensible est une couche organique, organique-inorganique ou minérale dopée pour la rendre photosensible.

Du fait que le guide d'onde et le réseau de Bragg ont été réalisés en une seule étape, le réseau de Bragg photoinscrit dans la zone 5 couvre toute la largeur du guide d'onde. De part et d'autre de cette zone 5, c'est-à-dire dans les zones 6 et 7, le faisceau n'inscrit plus que le guide d'onde qui constitue ainsi dans les zones 6 et 7 des portions de guide d'entrée et de sortie.

Sur la figure 3 qui illustre en une vue de dessus le composant optique final, le guide onde est désigné par la référence 10, les portions d'entrée et de sortie par les références respectivement 11 et 12 et le réseau de Bragg par la référence 13.

Après l'écriture, il suffit de cliver les deux extrémités du composant, selon les deux lignes en pointillés, pour le coupler avec les fibres optiques. Bien entendu, pour éviter cette étape supplémentaire, dans certains cas, le guide d'onde et le réseau peuvent être directement inscrits et donc couplés avec une source laser ou tout autre dispositif optoélectronique pouvant nécessiter le couplage en sortie ou en entrée avec un réseau de Bragg.

Le procédé selon l'invention est applicable à toute couche photosensible ou système multicouche constituant une structure guidante, ou encore à des matériaux massifs, photosensibles.

Il est également possible d'obtenir un réseau en relief sur un guide en relief, qui pourra être recouvert ou non par la suite, en trempant la couche dans un solvant alcoolique. Cette étape de gravure permet de dissoudre la partie non insolée de la couche photosensible, c'est-à-dire autour du guide d'onde et également la partie d'indice bas du réseau photoinscrit dans le guide.

Il est à noter que le procédé de fabrication selon l'invention présente les avantages majeurs d'être rapide et peu coûteux, du fait que la photoinscription du guide d'onde et du réseau de Bragg se font simultanément en une seule étape.

L'inscription de réseaux de Bragg dans un guide d'onde présente un grand intérêt pour le développement de nouvelles fonctions optiques intégrées. Ces réseaux doivent être couplés en entrée et en sortie avec d'autres éléments optiques tels que des guides d'ondes, des fibres optiques ou des composants optoélectroniques, à savoir par exemple des diodes laser ou des photodiodes. L'alignement du réseau de Bragg avec l'élément optique d'entrée et de sortie, doit être le plus précis possible. Dans la présente invention, le fait d'inscrire simultanément le guide d'onde d'entrée, le réseau de Bragg et le guide d'onde de sortie permet d'assurer systématiquement un alignement parfait de ces trois éléments. Ces guides d'ondes d'entrée et de sortie peuvent par la suite être aisément alignés avec d'autres éléments optiques ou optoélectronique par les procédés classiques.

La difficulté technique de l'inscription simultanée du réseau de Bragg et des guides d'ondes d'entrée et de sortie réside dans la capacité d'obtenir le même confinement de la lumière dans les trois éléments, à savoir le guide d'entrée, le réseau de Bragg et le guide de sortie. Il est en effet important d'obtenir la même largeur de guide, la même profondeur d'inscription et la même variation d'indice de réfraction tout au long du circuit.

En ce qui concerne la largeur du guide, le procédé proposé par la présente invention permet d'avoir la même largeur d'inscription tout au long du circuit, c'est à dire à travers la plaque de silice sans masque de phase et à travers la plaque de silice avec masque de phase.

En ce qui concerne la profondeur d'écriture, le procédé d'écriture est réalisé avec un système dont la profondeur de champ est nettement supérieure à la profondeur de la couche guidante qui va accueillir le guide et le réseau.

En ce qui concerne la variation d'indice, le procédé mis au point selon l'invention permet d'inscrire un guide d'onde avec une variation d'indice suffisante et contrôlée entre ce même guide et la partie de la couche non isolée. La variation d'indice entre le niveau haut du réseau et le niveau bas est nettement plus faible et contrôlée par l'énergie injectée à travers le masque de phase lors de l'inscription. Cette double variation d'indice est possible car le procédé développé selon l'invention inscrit le guide d'onde d'entrée et de sortie en saturant le matériau dans ces deux zones, et en saturant le matériau uniquement dans la zone de haut indice dans la partie réseau.

## Revendications

1. Procédé de fabrication de composants optiques intégrés utilisant des réseaux de Bragg, selon lequel on réalise dans une couche photosensible par photoinscription en une seule étape avec le faisceau d'un laser un guide d'onde et, dans ce guide d'onde, un réseau de Bragg, à travers une plaque (4) en un matériau transparent à la lumière du laser, tel qu'une plaque de silice, et dans laquelle est gravé un masque de phase dans la zone (5) se trouvant au-dessus de la partie devant comprendre le réseau de Bragg, **caractérisé en ce que** l'on réalise dans la plaque (4) dans le sens du déplacement du faisceau de lumière de photoinscription (9) au moins une zone sans réseau gravé (6, 7), à l'avant et/ou à l'arrière de la zone de masque de phase (5), **en ce que** l'on déplace le faisceau laser successivement sur la zone sans réseau gravé (6, 7) et la zone gravé (5) pour inscrire dans la couche photosensible (1) en alignement avec le réseau de Bragg photoinscrit (13) au moins une portion de guide d'onde (11, 12) qui constitue un guide d'entrée (11) et/ou de sortie (12) pour le réseau de Bragg (13).

2. Composant optique obtenu selon le procédé d'après la revendication 1, **caractérisé en ce que** le réseau de Bragg photoinscrit (13) couvre toute la largeur du guide d'onde (10).

3. Composant optique selon la revendication 2, **caractérisé en ce qu'**il comporte, en alignement avec le réseau de Bragg (13), des portions de guide d'onde (11 et 12) formant des guides d'entrée et de sortie ayant la même largeur de guide, la même profondeur d'inscription et la même variation d'indice de réfraction sur toute la longueur de l'ensemble formé par ladite portion (11, 12) et le réseau de Bragg (13).
